# EUROPÄISCHE PATENTSCHRIFT

(11) **EP 3 443 233 B1**
(45) Veröffentlichungstag und Bekanntmachung des Hinweises auf die Patenterteilung: **05.01.2022**
(21) Anmeldenummer: 17720675.2
(22) Anmeldetag: 07.04.2017
(51) Int. Cl.: F16B 2/24, F16B 5/06

(54) **CLIP ZUM BEFESTIGEN EINES ERSTEN ELEMENTS AN EINEM ZWEITEN ELEMENT**
CLIP FOR FASTENING A FIRST ELEMENT TO A SECOND ELEMENT
CLIP SERVANT À FIXER UN PREMIER ÉLÉMENT À UN DEUXIÈME ÉLÉMENT

(30) Priorität: 13.04.2016 DE 102016004337
(43) Veröffentlichungstag der Anmeldung: 20.02.2019
(60) Teilanmeldung: 21164587.4
(73) Patentinhaber: A. Raymond et Cie. SCS, 38000 Grenoble (FR)
(72) Erfinder: BINKERT, Sven, 79540 Lörrach (DE)
(74) Vertreter: Tilmann, Max Wilhelm
(86) Internationale Anmeldenummer: PCT/EP2017/000441
(87) Internationale Veröffentlichungsnummer: WO 2017/178104

(56) Entgegenhaltungen:
- EP-A1- 2 508 765
- EP-B1- 2 404 067
- WO-A1-2008/099243
- WO-A1-2012/129233
- DE-A1-102012 212 508

## Beschreibung

Die Erfindung betrifft einen Clip zum Befestigen eines ersten Elements an einem zweiten Element. Ferner betrifft die Erfindung eine Vorrichtung mit einem ersten Element und einem an dem ersten Element befestigten zweiten Element, wobei das erste Element ein Loch aufweist und das zweite Element mittels eines Clips an dem ersten Element befestigt ist.

Aus WO 2012/104250 A1 ist ein Clip zum Befestigen eines ersten Elements an einem zweiten Element bekannt. Der Clip weist einen Kopf und eine Spitze auf. Der dort beschriebene Clip weist eine erste Seite (dort mit Außenflügel 13 beschrieben) und eine der ersten Seite gegenüberliegende zweite Seite auf. Die erste Seite erstreckt sich von dem Kopf bis hin zur Spitze, die unter anderem von den beiden Scheiteln der bogenförmigen Umbiegeabschnitte 15 gebildet wird, die am Ende der ersten Seite vorgesehen sind. Ebenso erstreckt sich die zweite Seite von dem Kopf in Richtung auf die Spitze, wobei die Spitze des Weiteren durch die beiden Scheitel von zwei am Ende der zweiten Seite vorgesehenen bogenförmigen Umbiegeabschnitten gebildet wird. Bei dem aus WO 2012/104250 A1 bekannten Clip erstreckt sich eine erste Seitenwand, die dort mit Randflügel 21 bezeichnet wird, von der ersten Seite (von dem Außenflügel 13) in Richtung auf die zweite Seite (in Richtung auf den dem einen Außenflügel 13 gegenüberliegenden Außenflügel 13).

Ferner erstreckt sich eine zweite Seitenwand von der zweiten Seite in Richtung auf die erste Seite.

Aus EP 2 404 067 B1 ist ein Clip zum Befestigen eines ersten Elements an einem zweiten Element bekannt, wobei der Clip einen Kopf und eine Spitze aufweist. Bei dem aus EP 2 404 067 B1 bekannten Clip ist eine erste Seite vorgesehen, die sich von dem Kopf in Richtung auf die Spitze erstreckt, und eine zweite Seite, die sich von dem Kopf in Richtung auf die Spitze erstreckt. Eine erste Seitenwand erstreckt sich von der ersten Seite in Richtung auf die zweite Seite und eine zweite Seitenwand erstreckt sich von der zweiten Seite in Richtung auf die erste Seite. Die erste Seitenwand hat in der unter Rückgriff auf die Fig. 1 bis 4 der EP 2 404 067 B1 beschriebenen Ausführungsform, die dort als zum Stand der Technik gehörig gewürdigt wird, einen ersten vorstehenden Finger, der mit einem ersten vorstehenden Finger der zweiten Seitenwand überlappt. Ferner weist die erste Seitenwand einen zweiten vorstehenden Finger auf, der mit einem zweiten vorstehenden Finger der zweiten Seitenwand überlappt. Als Neuerung lehrt die EP 2 404 067 B1 an der ersten Seitenwand einen einzigen vorstehenden Finger (dort mit dem Bezugszeichen 9 bezeichnet; vgl. Fig. 5 und 6 der EP 2 404 067 B1) vorzusehen, der über einen Bereich der zweiten Seitenwand überlappt. Ebenso schlägt die EP 2 404 067 B1 als Neuerung vor, die zweite Seitenwand mit einem einzigen vorstehenden Finger auszubilden, der über einen Bereich der ersten Seitenwand überlappt.

Die EP 2 508 765 A1 bezieht sich auf einen Clip, der ein vibrierendes Element wie beispielsweise einen Lautsprecher (Fahrzeuglautsprecher) an einem Fahrzeug befestigt. Die WO 2012/129233 A1 betrifft ebenfalls einen Befestigungsclip zum Befestigen von Zubehör an Panels, insbesondere Clips für Airbags von Fahrzeugen. Vor diesem Hintergrund lag der vorliegenden Erfindung die Aufgabe zugrunde, einen Clip zum Befestigen eines ersten Elements an einem zweiten Element vorzuschlagen, der insbesondere gegen Torsionsbelastung und Biegebelastung des zwischen dem Kopfs und der Spitze befindlichen Schafts widerstandsfähiger ist.

Diese Aufgabe wird durch den Gegenstand des Anspruchs 1 gelöst. Vorteilhafte Ausführungsformen sind in den Unteransprüchen und der hiernach folgenden Beschreibung wiedergegeben.

Die Erfindung geht von dem Grundgedanken aus, nicht nur einen von der ersten Seitenwand vorstehenden ersten Finger vorzusehen, der über einen Bereich der zweiten Seitenwand überlappt, sondern auch einen von der ersten Seitenwand vorstehenden zweiten Finger vorzusehen, der über einen anderen Bereich der zweiten Seitenwand überlappt. Die Erfindung hat erkannt, dass der Schaft des Clips besonders Torsions- und Knicksteif ausgebildet werden kann, wenn zwei vorstehende Finger einer ersten Seitenwand mit Bereichen der zweiten Seitenwand überlappen.

Unter einem "Clip" zum Befestigen eines ersten Elements an einem zweiten Element wird eine Befestigungsvorrichtung verstanden, die zumindest eine erste Kontaktfläche und zumindest eine zweite, der ersten Kontaktfläche zugewandte Kontaktfläche aufweist. Die erste Kontaktfläche ist in der Regel an einem feststehenden Element der Befestigungsvorrichtung vorgesehen, während die zweite Kontaktfläche auf einem federnden Element der Befestigungsvorrichtung vorgesehen ist. Derartige Befestigungsvorrichtungen sind dazu vorgesehen, mit einer Spitze in eine Ausnehmung, meist ein Loch, in dem ersten Element eingeführt zu werden. Dabei wird das die zweite Kontaktfläche tragende federnde Element während des Einschiebens eingedrückt, federt jedoch nach dem Passieren des Lochs wieder in seine Ausgangsstellung zurück. Das erste Element ist meist als flächiges Element, beispielsweise als Platte oder als Blech eines Teils eines Rahmens eines Fahrzeugs ausgebildet. Das erste Element kann jedoch auch ein Sackloch mit einer entsprechend gewählten Hinterschneidung aufweisen, die dem federnden Element das Ausfedern ermöglicht, nachdem es einen engeren Teil des Lochs oberhalb der Hinterschneidung passiert hat. Das zweite Element kann durch Klemmung an dem ersten Element befestigt werden, beispielsweise wenn es zwischen einem Kopf des Clips und einer Oberfläche des ersten Elements geschoben wird und der Abstand der ersten Kontaktfläche, die dann am Kopf des Clips vorgesehen ist, und der zweiten Kontaktfläche des Clips so gewählt ist, dass sie bei einer bestimmten Materialstärke des ersten Elements und einer bestimmten Materialstärke des zweiten Elements eine solche Klemmung erzeugen kann. Ebenso ist es denkbar, dass das zweite Element ebenfalls ein Loch aufweist und der Clip mit seiner Spitze durch beide Löcher geführt wird. Ebenso ist es denkbar, dass das zweite Element an einem Kopf des Clips befestigt wird, wenn dieser beispielsweise einen Haken oder einen Befestigungspilz aufweist oder wenn das zweite Element schlichtweg mit dem Kopf des Clips verklebt, verschweißt oder in anderer Weise fügend verbunden wird.

Unter einem Kopf eines solchen Clips wird eine an einem Ende des Clips vorgesehene Verbreiterung verstanden. Der Kopf ist in der Regel dafür vorgesehen, um zu verhindern, dass der Clip gänzlich durch ein Loch des ersten Elements geschoben werden kann. Häufig ist der Kopf auch dafür ausgebildet, um die für das Einschieben des Clips in ein Loch des ersten Elements aufzubringende Kraft auf den Clip applizieren zu können. Hierzu weist der Clip häufig eine der Spitze abgewandte flache Oberfläche auf. In einer bevorzugten Ausführungsform ist der Kopf starr ausgebildet, wobei unter "starr" verstanden wird, dass kein Abschnitt des Kopfes relativ zu einem anderen Kopf beweglich, beispielsweise federnd ausgebildet ist. In einer alternativen Ausführungsform weist der Kopf einen starren Grundkörper auf, an dem zum Kopf zugehörige federnde Elemente, beispielsweise federnde Arme oder schirmartige Dichtlippen vorgesehen sind. In einer bevorzugten Ausführungsform ist die größte Querschnittsfläche aller Querschnittsflächen des Kopfs in Ebenen senkrecht zur Längsachse des Clips größer als die größte Querschnittsfläche aller Querschnittsflächen des Schafts in Ebenen senkrecht zur Längsachse des Clips.

Der Clip weist ferner eine Spitze auf. Mit "Spitze" wird im Kontext dieser Beschreibung lediglich dass dem Kopf gegenüberliegende Ende des Clips bezeichnet. Zwar ist es in einer bevorzugten Ausführungsform vorgesehen, dass ein sich von dem Kopf in Richtung auf die Spitze erstreckender Schaft des Clips zur Spitze hin verjüngt. Dies ist aber nicht zwingend notwendig. Als Spitze im Kontext dieser Beschreibung wird auch ein in einer denkbaren Ausführungsform vorzusehendes stumpfes Ende an dem dem Kopf gegenüberliegenden Ende eines Schafts verstanden. In einer bevorzugten Ausführungsform kann die Spitze pyramidenförmig oder kegelförmig oder pyramidenstumpfförmig oder kegelstumpfförmig zulaufen. Ebenso kann die Spitze durch den First eines dachförmigen Endabschnitts eines sich von dem Kopf zur Spitze hin erstreckenden Schafts ausgebildet werden. Dies ist aber nicht zwingend notwendig. Die Spitze kann durch einen einzigen Abschnitt des Clips gebildet werden. In einer bevorzugten Ausführungsform wird die Spitze jedoch aus mehreren Teilabschnitten des Clips gebildet, beispielsweise durch die vier Scheitel der bogenförmigen Umbiegeabschnitte 15, wie sie in der WO 2012/104250 A2 gezeigt werden oder die beiden Scheitel der Bogenabschnitte der in Fig. 1, 2, 7, 8, 9, 10 der EP 2 404 067 B1 dargestellten Ausführungsformen.

Zwischen dem Kopf und der Spitze weist der Clip einen, ggf. aus mehreren Teilen zusammengesetzten Schaft auf. Der Clip weist eine Längsachse auf, die sich vom Kopf zur Spitze erstreckt. Insbesondere bevorzugt ist der Schaft in seiner vom Kopf zur Spitze weisenden Längserstreckung länger, als in einer senkrecht zur Längserstreckung weisenden Breitenrichtung. Insbesondere bevorzugt weist die Längsachse des Clips in Richtung der Längserstreckung des Schafts. In einer bevorzugten Ausführungsform ist der Clip bezüglich einer Ebene, die die Längsachse des Clips enthält, spiegelsymmetrisch ausgeführt. In einer alternativen Ausführungsform ist der Clip in der Weise rotationssymmetrisch ausgeführt, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann.

Der Clip weist eine erste Seite auf, die sich von dem Kopf in Richtung auf die Spitze erstreckt. Der Clip weist einen, ggf. auch aus mehreren Elementen des Clips gebildeten Schaft auf. Dieser Schaft weist eine erste Seite auf, die sich von dem Kopf in Richtung auf die Spitze erstreckt. Ebenso weist dieser Schaft eine zweite Seite auf, die sich von dem Kopf in Richtung auf die Spitze erstreckt. In einer besonders bevorzugten Ausführungsform erstreckt sich die erste Seite von dem Kopf bis zu der Spitze, wobei sich an dem spitzenseitigen Ende der ersten Seite Abschnitte des Clips anschließen, die zur Bildung der Spitze beitragen. In einer besonders bevorzugten Ausführungsform erstreckt sich die zweite Seite von dem Kopf bis zu der Spitze, wobei sich an dem spitzenseitigen Ende der zweiten Seite Abschnitte des Clips anschließen, die zur Bildung der Spitze beitragen. Es sind aber auch Bauformen denkbar, bei denen der Schaft des Clips zwar ausgehend vom Kopf mit einer ersten Seite und einer zweiten Seite beginnt, die sich jeweils in Richtung auf dem Kopf erstrecken, dann aber zwischen der ersten Seite und den die Spitze bildenden Abschnitten des Clips andere, insbesondere im Verhältnis zu der Erstreckung der ersten Seite in andere Richtungen weisende Abschnitte des Clips vorgesehen sind, und/oder dann aber zwischen der zweiten Seite und den die Spitze bildenden Abschnitten des Clips andere, insbesondere im Verhältnis zu der Erstreckung der zweiten Seite in andere Richtungen weisende Abschnitte des Clips vorgesehen sind.

In einer bevorzugten Ausführungsform sind die erste Seitenwand und die zweite Seitenwand fluchtend ausgerichtet. Unter fluchtend wird insbesondere bevorzugt verstanden, dass die erste Seitenwand eine nach außen weisende Oberfläche aufweist und die zweite Seitenwand eine nach außen weisende Oberfläche aufweist und dass die nach außen weisende Oberfläche der ersten Seitenwand und die nach außen weisende Oberfläche der zweiten Seitenwand in einer Ebene angeordnet sind. In einer bevorzugten Ausführungsform sind die erste Seitenwand und die zweite Seitenwand auf derselben Seite einer Ebene angeordnet, die die Längsachse des Clips enthält.

Der erfindungsgemäße Clip weist eine erste Seitenwand auf, die sich von der ersten Seite in Richtung auf die zweite Seite erstreckt. In einer besonders bevorzugten Ausführungsform weist der Clip eine dritte Seitenwand auf, die sich ebenfalls von der ersten Seite in Richtung auf die zweite Seite erstreckt, wobei sich die erste Seitenwand von einem ersten Rand der ersten Seite in Richtung auf die zweite Seite erstreckt und die dritte Seitenwand sich von einem dem ersten Rand gegenüberliegenden zweiten Rand der ersten Seite in Richtung auf die zweite Seite erstreckt. In einer besonders bevorzugten Ausführungsform weist der Clip eine vierte Seitenwand auf, die sich ebenfalls von der zweiten Seite in Richtung auf die erste Seite erstreckt, wobei sich die zweite Seitenwand von einem ersten Rand der zweiten Seite in Richtung auf die erste Seite erstreckt und die vierte Seitenwand sich von einem dem ersten Rand gegenüberliegenden zweiten Rand der zweiten Seite in Richtung auf die erste Seite erstreckt. In einer bevorzugten Ausführungsform sind die dritte Seitenwand und die vierte Seitenwand fluchtend ausgerichtet. Unter fluchtend wird insbesondere bevorzugt verstanden, dass die dritte Seitenwand eine nach außen weisende Oberfläche aufweist und die vierte Seitenwand eine nach außen weisende Oberfläche aufweist und dass die nach außen weisende Oberfläche der dritten Seitenwand und die nach außen weisende Oberfläche der vierte Seitenwand in einer Ebene angeordnet sind. In einer bevorzugten Ausführungsform ist die erste Seitenwand parallel zur dritten Seitenwand ausgeführt und/oder die zweite Seitenwand parallel zur vierten Seitenwand ausgeführt Wie vorstehend ausgeführt, kann der Clip spiegelsymmetrisch bezüglich einer Ebene ausgeführt sein, die die Längsachse des Clips enthält. In einer solchen Ausführungsform ist die dritte Seitenwand so ausgeführt, wie die erste Seitenwand, und die vierte Seitenwand so ausgeführt, wie die zweite Seitenwand, so dass die nachfolgenden Erläuterungen von Merkmalen der ersten Seitenwand auch Erläuterungen von Merkmalen der dritten Seitenwand sind und die nachfolgenden Erläuterungen von Merkmalen der zweiten Seitenwand auch Erläuterungen von Merkmalen der vierten Seitenwand sind. Wie vorstehend ausgeführt, kann der Clip aber auch in der Weise rotationssymmetrisch ausgeführt sein, dass es zumindest eine Ebene gibt, die die Längsachse des Clips enthält, bei der jeder Abschnitt des Clips, der sich auf einer Seite dieser Ebene befindet, durch eine Drehung um 180° um die Längsachse in Deckung mit einem identisch ausgebildeten Abschnitt des Clips auf der anderen Seite dieser Ebene gebracht werden kann. In einer solchen Ausführungsform ist die dritte Seitenwand so ausgeführt, wie die zweite Seitenwand, und die vierte Seitenwand so ausgeführt, wie die erste Seitenwand, so dass die nachfolgenden Erläuterungen von Merkmalen der ersten Seitenwand auch Erläuterungen von Merkmalen der vierten Seitenwand sind und die nachfolgenden Erläuterungen von Merkmalen der zweiten Seitenwand auch Erläuterungen von Merkmalen der dritten Seitenwand sind.

In der Beschreibung wird als Inneres des Clips der unmittelbare Bereich um die Längsachse des Clips verstanden und/oder der von der ersten Seite, der zweiten Seite und der ersten Seitenwand und der zweiten Seitenwand und - soweit vorhanden - der von der dritten Seitenwand und der vierten Seitenwand eingeschlossene Raum. Soweit in dieser Beschreibung von nach außen weisenden Oberflächen gesprochen wird oder in sonstiger Weise der Begriff "nach außen" verwendet wird, so ist damit eine Richtung gemeint, die von der Längsachse des Clips fortweist.

Bei dem erfindungsgemäßen Clip weist die erste Seitenwand einen ersten vorstehenden Finger auf, der über einen Bereich der zweiten Seitenwand überlappt und einen zweiten vorstehenden Finger, der über einen anderen Bereich der zweiten Seitenwand überlappt. Im Kontext dieser Beschreibung überlappt ein Finger über einen Bereich einer Seitenwand, wenn zumindest ein Teil des Fingers so angeordnet ist, dass er eine Flächennormale einer Oberfläche dieses Bereichs schneidet. Es ist für den Erfolg der Erfindung nicht zwingend notwendig, dass sich eine Oberfläche des Fingers in Kontakt mit einer Oberfläche des Bereichs der Seitenwand befindet, mit der der Finger überlappt. In einer bevorzugten Ausführungsform steht jedoch eine Oberfläche des Fingers mit der Oberfläche des Bereichs der Seitenwand, mit der er überlappt, im Kontakt.

In einer bevorzugten Ausführungsform ist die Länge des Fingers größer als die Breite des Fingers, wobei als Länge die Richtung der Erstreckung des Fingers von der ersten Seitenwand in Richtung auf die zweite Seitenwand verstanden wird. Neben der senkrecht zur Länge stehenden Breite weist der Finger insbesondere bevorzugt eine Höhe auf, die in der Regel durch die Materialstärke vorgegeben ist und auch als Dicke bezeichnet werden kann. In einer bevorzugten Ausführungsform ist die Breite des Fingers größer als die Höhe (Dicke) des Fingers. In einer bevorzugten Ausführungsform erstreckt sich die Breitenrichtung des Fingers parallel zur Längsachse des Clips und/oder die Längsrichtung des Fingers senkrecht zur Längsachse oder senkrecht zu einer Linie, die parallel zur Längsachse verläuft.

In einer bevorzugten Ausführungsform weist die erste Seitenwand einen Grundkörper auf, von dem der erste vorstehende Finger vorsteht, bzw. der zweite vorstehende Finger vorsteht. Der Grundkörper weist insbesondere bevorzugt eine Länge auf, wobei unter der Länge insbesondere die Erstreckung des Grundkörpers von der ersten Seite in Richtung auf die zweite Seite verstanden wird. In einer bevorzugten Ausführungsform geht die erste Seite über eine Kante in die erste Seitenwand über. Als Länge wird dann insbesondere die maximale Erstreckung des Grundkörpers von dieser Kante in Richtung auf die zweite Seite verstanden. Ergänzend oder alternativ erstreckt sich die Längenrichtung des Grundkörpers senkrecht zur Längsachse des Clips, bzw. senkrecht zu einer Linie, die parallel zur Längsachse des Clips verläuft. Der Grundkörper hat insbesondere bevorzugt auch eine Breite, die sich insbesondere bevorzugt in eine Richtung parallel zur Längsachse des Clips erstreckt. Der Grundkörper hat ferner eine Höhe, die auch als Dicke bezeichnet werden kann und meist durch die Materialstärke vorgegeben ist. In einer bevorzugten Ausführungsform ist die Breite des Grundkörpers größer als die Länge des Grundkörpers.

In einer bevorzugten Ausführungsform ist die Breite des ersten vorstehenden Fingers und/oder die Breite des zweiten vorstehenden Fingers kleiner als die Breite des Grundkörpers. In einer bevorzugten Ausführungsform ist die Breite eines vorstehenden Fingers kleiner als die Hälfte der Breite des Grundkörpers, insbesondere bevorzugt kleiner als ein Drittel, insbesondere bevorzugt kleiner als ein Viertel der Breite des Grundkörpers.

In einer bevorzugten Ausführungsform ist die Breite des ersten vorstehenden Fingers gleich der Breite des zweiten vorstehenden Fingers. In einer bevorzugten Ausführungsform ist der Abstand des Endes des ersten vorstehenden Fingers zu der zweiten Seite gleich dem Abstand des zweiten vorstehenden Fingers zu der zweiten Seite.

In einer bevorzugten Ausführungsform ist die Breite des Grundkörpers der ersten Seitenwand und/oder die Breite des Grundkörpers der zweiten Seitenwand größer als 40 %, insbesondere bevorzugt größer als 50 %, insbesondere größer als 60 %, insbesondere bevorzugt größer als 70 % und insbesondere bevorzugt größer als 80 % der Erstreckung des Schafts des Clips ist.

In einer bevorzugten Ausführungsform ist die Länge des vorstehenden Fingers kleiner als die maximale Länge des Grundkörpers. In einer alternativen Ausführungsform ist die Länge des vorstehenden Fingers gleich der maximalen Länge des Grundkörpers. In einer alternativen Ausführungsform ist die Länge des vorstehenden Fingers größer als die maximale Länge des Grundkörpers.

In einer bevorzugten Ausführungsform geht die erste Seite über eine Kante in die erste Seitenwand über, wobei diese Kante durch eine Ausnehmung unterbrochen wird. In einer bevorzugten Ausführungsform erstreckt sich ein in Richtung nach außen federnd vorgespanntes Element des Clips von innen durch die Ausnehmung hindurch nach außen. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. In einer bevorzugten Ausführungsform geht die zweite Seite über eine Kante in die zweite Seitenwand über, wobei diese Kante durch eine Ausnehmung unterbrochen wird. In einer bevorzugten Ausführungsform erstreckt sich ein in Richtung nach außen federnd vorgespanntes Element des Clips von innen durch die Ausnehmung hindurch nach außen.

In einer bevorzugten Ausführungsform geht die erste Seite über eine Kante in die erste Seitenwand über, wobei sich die Kante in eine Richtung parallel zur Längsachse des Clips erstreckt. In einer bevorzugten Ausführungsform geht die zweite Seite über eine Kante in die zweite Seitenwand über, wobei sich die Kante in eine Richtung parallel zur Längsachse des Clips erstreckt.

In einer bevorzugten Ausführungsform ist der Bereich der zweiten Seite, über den der erste vorstehende Finger der ersten Seitenwand überlappt benachbart dem Bereich der zweiten Seite angeordnet, über den der zweite vorstehende Finger der ersten Seitenwand überlappt. Insbesondere bevorzugt sind die der erste vorstehende Finger der ersten Seitenwand und der zweite vorstehende Finger der ersten Seitenwand nebeneinander angeordnet.

Insbesondere bevorzugt ist der erste vorstehende Finger der ersten Seitenwand einem ersten Ende eines Grundkörpers der ersten Seitenwand (in Breitenrichtung der Seitenwand gesehen) näher, als einem gegenüberliegenden, zweiten Ende des Grundkörpers. Insbesondere bevorzugt ist das erste Ende das dem Kopf nähere Ende des Grundkörpers. Ergänzend oder alternativ ist der zweite vorstehende Finger der ersten Seitenwand dem zweiten Ende des Grundkörpers der ersten Seitenwand (in Breitenrichtung der Seitenwand gesehen) näher, als dem gegenüberliegenden, ersten Ende des Grundkörpers. Insbesondere bevorzugt ist das zweite Ende das der Spitze nähere Ende des Grundkörpers.

In einer bevorzugten Ausführungsform weist die erste Seitenwand einen flachen Grundkörper auf. In einer bevorzugten Ausführungsform weist die zweite Seitenwand einen flachen Grundkörper auf. Als flacher Grundkörper wird insbesondere bevorzugt ein Grundkörper verstanden, der eine flache, insbesondere bevorzugt in einer Ebene angeordnete Außenoberfläche aufweist. Insbesondere bevorzugt weist der flache Grundkörper zusätzlich eine gleichmäßige Höhe (Dicke) auf. Es ist denkbar, dass ein hier als flach bezeichneter flacher Grundkörper Ausbeulungen, beispielsweise kleine Noppen oder Führungsrippen aufweist oder Einbuchtungen oder Dellen. Auch ein solcher mit bewusst gewählten, singulären Abweichungen von der rein geometrisch flachen Form versehener Grundkörper wird im Zuge der vorliegenden Beschreibung als flacher Grundkörper verstanden. Weist der flache Grundkörper bewusst eine gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die von der singulären Abweichung eingenommene Fläche in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. Weist der flache Grundkörper bewusst mehrere gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die von jeder singulären Abweichung jeweils eingenommene Fläche in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. Weist der flache Grundkörper bewusst mehrere gewählte, singuläre Abweichung von der rein geometrisch flachen Form, beispielsweise Ausbeulungen, beispielsweise kleine Noppen oder Führungsrippen oder Einbuchtungen oder Dellen auf, so ist in einer bevorzugten Ausführungsform die Summe aller von den singulären Abweichung eingenommenen Flächen in der Ebene, die die ansonsten geometrische flache Oberfläche des Grundkörpers einnimmt, kleiner als 30%, insbesondere bevorzugt kleiner als 20%, insbesondere bevorzugt kleiner als 10% der Fläche der verbleibenden, geometrisch flachen Oberfläche. In einer bevorzugten Ausführungsform ist der flache Grundkörper auch im geometrischen Sinne gänzlich flach und weist keine singulären Abweichung von der rein geometrisch flachen Form auf.

In einer bevorzugten Ausführungsform ist der erste Finger fluchtend mit einem flachen Grundkörper der ersten Seitenwand ausgeführt. Insbesondere bevorzugt liegt die nach außen weisende Oberfläche des Fingers in einer Ebene mit der nach außen weisenden Oberfläche des Grundkörpers. In einer bevorzugten Ausführungsform weist der vorstehende Finger zusätzlich die gleiche Materialstärke (Dicke; Höhe) auf wie der Grundkörper. Insbesondere bevorzugt befindet sich zwischen dem Grundkörper und dem ersten vorstehenden Finger kein Biegeabschnitt.

Die erste Seitenwand weist einen flachen Grundkörper auf. Der zweite vorstehende Finger weist einen Endabschnitt auf, der parallel zum flachen Grundkörper verläuft. Der Endabschnitt des zweiten Fingers weist eine nach außen weisende Oberfläche aufweist, die in einer Ebene verläuft, die parallel zu einer Ebene verläuft, in der sich die nach außen weisende Oberfläche des Grundkörpers erstreckt. Insbesondere bevorzugt weist der Endabschnitt des zweiten vorstehenden Fingers zusätzlich die gleiche Materialstärke auf, wie der Grundkörper. Zwischen dem Grundkörper und dem Endabschnitt des zweiten Fingers befindet sich ein Biegeabschnitt. Der Biegeabschnitt ist als Doppelbiegung ausgebildet, der zunächst in eine erste Richtung gebogen ist und dann im weiteren Verlauf in eine andere Richtung gebogen ist.

In einer bevorzugten Ausführungsform hat die zweite Seitenwand eine Aufnahme, um den ersten vorstehenden Finger aufzunehmen. Als Aufnahme wird insbesondere eine Eindellung in einen Grundkörper der zweiten Seitenwand verstanden oder ein Abschnitt der Seitenwand, der sich parallel versetzt zu einem flachen Grundkörper der Seitenwand erstreckt, wobei der Übergang zwischen dem flachen Grundkörper und dem parallel versetzten Abschnitt vorzugsweise durch eine Kehle gebildet wird. Dabei ist davon auszugehen, dass sich der parallel versetzt vorgesehene Abschnitt aus fertigungstechnischen Gründen nicht wird perfekt parallel ausgerichtet ausführen lassen und deshalb ggf. auch winkelig zum flachen Grundkörper stehen kann. Ebenso wird es aus fertigungstechnischen Gründen ggf. nicht möglich sein, den parallel versetzten, bzw. winkelig verlaufenden Abschnitt perfekt eben zu gestalten. In einer besonders bevorzugten Ausführungsform fluchtet der erste vorstehende Finger der ersten Seitenwand mit einem flachen Grundkörper der zweiten Seitenwand. Um bei einer derartigen Ausführungsform ein Überlappen des ersten vorstehenden Fingers der ersten Seitenwand mit einem Bereich der zweiten Seitenwand zu ermöglichen, wird der Bereich der zweiten Seitenwand, mit dem ein derart ausgeführter erster vorstehender Finger der ersten Seitenwand überlappt durch eine rücksprungartige oder taschenartige oder als Eindellung ausgeführte Aufnahme des zweiten Grundkörpers gebildet.

In einer bevorzugten Ausführungsform hat die zweite Seitenwand zumindest einen vorstehenden Finger, der über einen Bereich der ersten Seitenwand überlappt. In einer bevorzugten Ausführungsform ist der vorstehende Finger der zweiten Seitenwand so ausgebildet, wie der zweite vorstehende Finger der ersten Seitenwand.

In einer bevorzugten Ausführungsform weist die erste Seitenwand einen flachen Grundkörper auf, wobei eine Schmalseite des Grundkörpers der ersten Seite der zweiten Seitenwand zugewandt ist, wobei die zweite Seitenwand einen flachen Grundkörper aufweist, wobei eine Schmalseite des Grundkörpers der zweiten Seitenwand der ersten Seitenwand zugewandt ist. In einer bevorzugten Ausführungsform erstreckt sich die Schmalseite des Grundkörpers rechtwinklig zu einer nach außen weisenden Oberfläche des Grundkörpers. In dieser bevorzugten Ausführungsform ist die Schmalseite der ersten Seitenwand und/oder die Schmalseite der zweiten Seitenwand zumindest abschnittweise eben ausgebildet. In einer bevorzugten Ausführungsform erstreckt sich die Schmalseite der ersten Seitenwand in einer Ebene, die parallel zur Längsachse verläuft oder die Längsachse des Clips enthält und/oder die Schmalseite der zweiten Seitenwand einer Ebene, die parallel zur Längsachse verläuft oder die Längsachse des Clips enthält.

In einer bevorzugten Ausführungsform überlappt der erste vorstehende Finger über einen Bereich des Grundkörpers der zweiten Seitenwand, der an die ebene Schmalseite der zweiten Seitenwand angrenzt, und/oder der zweite vorstehende Finger über einen Bereich des Grundkörpers der zweiten Seitenwand, der an die ebene Schmalseite der zweiten Seitenwand angrenzt.

In einer bevorzugten Ausführungsform weist die erste Seitenwand einen flachen Grundkörper und eine in einem ersten Abschnitt ebene Schmalseite auf, wobei sich der ebene Abschnitt der Schmalseite in eine Richtung parallel zur Längsachse des Clips erstreckt. In dieser Ausführungsform weist der Grundkörper anschließend an den ebenen Abschnitt der Schmalseite einen in Richtung auf die zweite Seitenwand vorspringenden Vorsprung auf. In einer bevorzugten Ausführungsform greift der Vorsprung in einen Rücksprung ein, der in der zweiten Seitenwand vorgesehen ist. In einer bevorzugten Ausführungsform weist die zweite Seitenwand einen flachen Grundkörper und eine in einem ersten Abschnitt ebene Schmalseite auf, wobei sich der Rücksprung an den ebenen Abschnitt der Schmalseite anschließt. Ergänzend oder alternativ weist die zweite Seitenwand einen flachen Grundkörper und eine in einem ersten Abschnitt ebene Schmalseite auf, wobei sich der ebene Abschnitt der Schmalseite in eine Richtung parallel zur Längsachse des Clips erstreckt. In dieser Ausführungsform weist der Grundkörper anschließend an den ebenen Abschnitt der Schmalseite einen in Richtung auf die erste Seitenwand vorspringenden Vorsprung auf. In einer bevorzugten Ausführungsform greift der Vorsprung in einen Rücksprung ein, der in der ersten Seitenwand vorgesehen ist. In einer bevorzugten Ausführungsform weist die erste Seitenwand einen flachen Grundkörper und eine in einem ersten Abschnitt ebene Schmalseite auf, wobei sich der Rücksprung an den ebenen Abschnitt der Schmalseite anschließt. Dabei sind diese Vorsprünge keine vorstehenden Finger, weil sie nicht mit einem Bereich der gegenüberliegenden Seitenwand überlappen. Durch dieses Zusammenwirken aus Vorsprüngen und Rücksprüngen an den Schmalseiten der Grundkörper der Seitenwände kann eine Verzahnung erzeugt werden, die die Steifigkeit des Clips erhöht, weil sie Relativbewegungen der Grundkörper der Seitenwände in Richtung parallel zur Längsrichtung des Clips verhindert.

In einer bevorzugten Ausführungsform ist ein Bogen an einem Ende der ersten Seite vorgesehen, wobei der Scheitel des Bogens am Ende der ersten Seite einen Teil der Spitze des Clips ausbildet und/oder ein Bogen an einem Ende der zweiten Seite vorgesehen, wobei der Scheitel des Bogens am Ende der zweiten Seite einen Teil der Spitze des Clips ausbildet. Dabei kann der Bogen ausgehend von der Seite nach innen ausgeführt werden, wie dies beispielsweise bei dem Umbiegeabschnitt 15 der WO 2012/104205 A1 vorgesehen ist. Ebenso kann der Bogen nach außen gebogen sein.

In einer bevorzugten Ausführungsform hat die erste Seite einen flachen Grundkörper, der sich von dem Kopf in Richtung auf die Spitze erstreckt, und die erste Seitenwand einen flachen Grundkörper, der in einem Winkel zum flachen Grundkörper der ersten Seite steht, insbesondere bevorzugt in einem Winkel zwischen 45 ° und 135 °, insbesondere bevorzugt in einem Winkel von 90 °.

In einer bevorzugten Ausführungsform hat die zweite Seite einen flachen Grundkörper, der sich von dem Kopf in Richtung auf die Spitze erstreckt, und die zweite Seitenwand einen flachen Grundkörper, der in einem Winkel zum flachen Grundkörper der zweiten Seite steht, insbesondere bevorzugt in einem Winkel zwischen 45 ° und 135 °, insbesondere bevorzugt in einem Winkel von 90 °.

In einer bevorzugten Ausführungsform ist der flache Grundkörper der ersten Seite parallel zum flachen Grundkörper der zweiten Seite ausgerichtet. In einer bevorzugten Ausführungsform weist der Clip eine erste Seite mit flachem Grundkörper, eine zweite, parallel zur ersten Seite ausgerichtete Seite mit flachem Grundkörper, eine erste Seitenwand mit flachem Grundkörper, die sich in einem Winkel von der ersten Seite zur zweiten Seite erstreckt, eine zweite Seitenwand mit flachem Grundkörper, die sich von der zweiten Seite in Richtung auf die erste Seite erstreckt, wobei die erste Seitenwand mit der zweiten Seitenwand fluchtend ausgebildet ist, auf, sowie eine dritte Seitenwand mit flachem Grundkörper, die sich in einem Winkel von der ersten Seite zur zweiten Seite erstreckt, und eine vierte Seitenwand mit flachem Grundkörper, die sich von der zweiten Seite in Richtung auf die erste Seite erstreckt, wobei die dritte Seitenwand mit der vierten Seitenwand fluchtend ausgebildet ist auf. Eine derartige Ausführungsform kann in einem Querschnitt senkrecht zur Längsachse des Clips einen Querschnitt in Form eines rechteckförmigen Rings aufweisen, der nur durch einen Spalt zwischen erster Seitenwand und zweiter Seitenwand sowie durch einen Spalt zwischen dritter Seitenwand und vierter Seitenwand unterbrochen wird.

In einer bevorzugten Ausführungsform ist eine Clipsfläche vorgesehen, die von der ersten Seite vorsteht und die von dem Kopf beabstandet ist und die dem Kopf zugewandt ist. Insbesondere bevorzugt ist diese Clipsfläche an einem federnden Element vorgesehen, das in Richtung nach außen vorgespannt ist. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. Dieses federnde Element durchgreift insbesondere bevorzugt eine Ausnehmung, die an der ersten Seite und/oder im Übergang von der ersten Seite zur ersten Seitenwand vorgesehen ist. In einer bevorzugten Ausführungsform ist eine Clipsfläche vorgesehen, die von der zweiten Seite vorsteht und die von dem Kopf beabstandet ist und die dem Kopf zugewandt ist. Insbesondere bevorzugt ist diese Clipsfläche an einem federnden Element vorgesehen, das in Richtung nach außen vorgespannt ist. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht. Dieses federnde Element durchgreift insbesondere bevorzugt eine Ausnehmung, die an der zweiten Seite und/oder im Übergang von der zweiten Seite zur zweiten Seitenwand vorgesehen ist. In einer bevorzugten Ausführungsform sind vier Clipsflächen vorgesehen, zwei die von der ersten Seite vorstehen und zwei, die von der zweiten Seite vorstehen, und die jeweils von dem Kopf beabstandet sind und dem Kopf zugewandt sind, sowie insbesondere bevorzugt jeweils an einem federnden Element vorgesehen sind, das in Richtung nach außen vorgespannt ist. Unter einer Vorspannung nach außen wird dabei auch eine Ausführungsform verstanden, bei der das vorgespannte Element eine Ruheposition hat, in der es von einem Teilbereich des Schafts, beispielsweise einer Seite des Schafts, vorsteht und aus der es unter Krafteinwirkung hinausbewegt werden kann, insbesondere bevorzugt in eine Richtung senkrechts zur Schaftachse (Längsachse), bzw. ein einer Richtung die parallel zu einer Senkrechten auf die Schaftachse (Längsachse) verläuft. Insbesondere bevorzugt ist das vorgespannte Element mit einem federnden Element verbunden oder Teil eines federnden Elements, so dass es unter Krafteinwirkung gegen eine zunehmende Federkraft aus der Ruheposition bewegt werden muss und die Federkraft bewirkt, dass der Vorsprung nach Wegfall der Krafteinwirkung in seine Ruheposition zurückkehrt. In einer bevorzugten Ausführungsform ist die Ruheposition die Position, in der das federnde Element keine Kraft ausübt. Die Ruheposition kann, muss aber nicht durch einen Anschlag definiert sein, gegen den das federnde Element das vorgespannte Element drückt oder zieht.

In einer bevorzugten Ausführungsform weist ein die Clipsfläche aufweisendes, federndes Element eine Abschrägung auf. Die Abschrägung kann so ausgebildet sein, dass sich die Abschrägung in Richtung auf die Spitze verjüngt. Dies ermöglicht es, dass das federnde Element beim Einschieben des Clips mit der Spitze in ein Loch eines Elements mit dem das Loch begrenzenden Rand in Kontakt kommt und durch diesen Rand entgegen der Federvorspannung nach innen gedrückt wird.

In einer bevorzugten Ausführungsform weist der Kopf des Clips eine Kopffläche auf, die der Clipsfläche zugewandt ist. In einer besonders bevorzugten Ausführungsform verläuft die Clipsfläche parallel zur Kopffläche, wenn das federnde Element sich in seiner Ausgangslage befindet, also nach außen gefedert ist. In einer bevorzugten Ausführungsform ist die Kopffläche an einem feststehenden Bereich des Kopfes ausgebildet. In einer alternativen Ausführungsform weist der Kopf federnde Arme auf, die in eine Richtung parallel zur Längsrichtung des Clips federn können, wobei die Kopffläche an einem Abschnitt des Arms vorgesehen ist, vorzugsweise an einem Endabschnitt des Arms vorgesehen ist.

In einer bevorzugten Ausführungsform sind der Kopf und die erste Seite und die erste Seitenwand und die zweite Seite und die zweite Seitenwand alle Teil eines einstückigen Elements, die durch das Biegen von Abschnitten eines Metallabschnitts erzeugt wurden. Ebenso ist es denkbar, den erfindungsgemäßen Clip aus Kunststoff, beispielsweise durch Spritzguss herzustellen.

Gemäß einer bevorzugten Ausführungsform weist der Kopf eine Seitenfläche auf und eine der Spitze zugewandte Kontaktfläche, wobei die Seitenfläche des Kopfes über eine erste gerundete Kante in die der Spitze zugewandte Kontaktfläche des Kopfes übergeht und die erste Seite über eine zweite gerundete Kante in die erste Seitenwand übergeht und die erste gerundete Kante über einen Bogenabschnitt in die zweite gerundete Kante übergeht.

In einer besonders bevorzugten Ausführungsform ist bei dem vorstehend beschriebenen ersten Aspekt der Erfindung das erste Bauteil so ausgeführt, dass das erste Bauteil
- einen Kopf und eine Spitze und
- eine erste Seite und eine zweite Seite aufweist, wobei sich die erste Seite vom dem Kopf in Richtung auf die Spitze erstreckt und die zweite Seite sich von dem Kopf in Richtung auf die Spitze erstreckt,
- wobei sich eine erste Seitenwand von der ersten Seite in Richtung auf die zweite Seite erstreckt,
wobei der Kopf eine Seitenfläche aufweist und eine der Spitze zugewandte Kontaktfläche und
die Seitenfläche des Kopfes über eine gerundete Kante in die der Spitze zugewandte Kontaktfläche des Kopfes übergeht, und/oder die erste Seite über eine gerundete Kante in die erste Seitenwand übergeht.

Durch den Einsatz der gerundeten Kanten werden Spitzen, Rücksprünge oder Kanten in diesen Bereichen vermieden, die zur Beschädigung der zu verbindenden Elemente führen können. Insbesondere in der Ausführungsform, in der die Seitenfläche des Kopfes über eine erste gerundete Kante in die der Spitze zugewandte Kontaktfläche des Kopfes übergeht und die erste Seite über eine zweite gerundete Kante in die erste Seitenwand übergeht und die erste gerundete Kante über einen Bogenabschnitt in die zweite gerundete Kante übergeht, kann das Verletzungsrisiko der beiden zu verbindenden Elemente stark reduziert werden.

In einer bevorzugten Ausführungsform ist die Seitenfläche des Kopfes fluchtend mit der ersten Seite.

In einer bevorzugten Ausführungsform erstreckt sich die gerundete Kante, über die die erste Seite in die erste Seitenwand übergeht in eine Richtung parallel zur Längsachse (Schaftachse) des Clips, während die gerundete Kante, mit der die Seitenfläche des Kopfes in die der Spitze zugewandte Kontaktfläche des Kopfes übergeht sich in eine Richtung erstreckt, die sich in einem Winkel, insbesondere bevorzugt senkrecht zu der Richtung ist, in der sich die gerundete Kante erstreckt, mit der die erste Seite in die erste Seitenwand übergeht. Die gerundete Kante ist insbesondere bevorzugt in einem Querschnitt senkrecht zu der Linie, in die sich die Kante erstreckt, bogenförmig ausgeführt.

Insbesondere bevorzugt ist der Bogenabschnitt, mit dem die erste gerundete Kante in die zweite gerundete Kante übergeht nach Art einer Kehle ausgeführt.

In einer bevorzugten Ausführungsform geht die der Spitze zugewandte Kontaktfläche des Kopfes über einen Bogenabschnitt in die erste Seitenwand über.

Der erfindungsgemäße Clip wird insbesondere bevorzugt zum Befestigen eines Elements (dem zweiten Element) an einem Karosserieteil (dem erstes Element) eines Fahrzeugs, insbesondere bevorzugt an Rahmen eines Fahrzeugs verwendet. Insbesondere bevorzugt wird der Clip zum Befestigen eines Paneels (zweites Element) an dem Rahmen eines Fahrzeugs (erstes Element) verwendet. Besonders bevorzugt wird der Clip zum Befestigen eines Airbags an einem Karosserieteil, insbesondere bevorzugt eines Rahmens eines Fahrzeugs verwendet.

Die erfindungsgemäße Vorrichtung weist ein erstes Element und ein an dem ersten Element befestigtes zweites Element auf, wobei das erste Element ein Loch aufweist und das zweite Element mittels eines erfindungsgemäßen Clips an dem ersten Element befestigt ist, wobei der Clips das Loch derart durchgreift, dass der Kopf des Clips auf einer Seite des ersten Elements und die Spitze des Clips auf der gegenüberliegenden Seite des Elements angeordnet ist. In einer bevorzugten Ausführungsform durchgreift der Clips das Loch derart, dass der Kopf des Clips auf einer Seite des ersten Elements und eine Clipsfläche des Clips auf der gegenüberliegenden Seite des Elements angeordnet ist. In einer bevorzugten Ausführungsform ist das erste Element ein Karosserieteil eines Fahrzeugs, vorzugsweise ein Rahmen eines Fahrzeugs. In einer bevorzugten Ausführungsform ist das zweite Element ein Paneel oder ein Airbag.

Nachfolgend wird die Erfindung anhand einer lediglich ein Ausführungsbeispiel der Erfindung näher darstellenden Zeichnung erläutert. Darin zeigen
- Fig. 1:: eine perspektivische Seitenansicht von schräg unten auf den erfindungsgemäßen Clip;
- Fig. 2:: eine perspektivische Ansicht von unten auf die Spitze des erfindungsgemäßen Clips und
- Fig. 3:: eine geschnittene, perspektivische Seitenansicht des erfindungsgemäßen Clips.

Der in den Fig. dargestellte Clip zum Befestigen eines ersten Elements an einem zweiten Element weist einen Kopf 1 und eine Spitze 2 auf. Zwischen dem Kopf 1 und der Spitze 2 erstreckt sich ein aus mehreren Teilabschnitten zusammengesetzter Schaft 3.

Der Schaft 3 weist eine erste Seite 4 und eine der ersten Seite 4 bezogen auf eine Längsachse A des Clips gegenüberliegend angeordnete und parallel zur ersten Seite 4 verlaufende zweite Seite 5 auf. Sowohl die erste Seite 4 als auch die zweite Seite 5 erstrecken sich von dem Kopf 1 in Richtung auf die Spitze 2. Die erste Seite 4 endet in einem bogenförmigen Biegeabschnitt 6, der ausgehend von der ersten Seite 4 nach innen gebogen ist. Der Scheitel des Bogens des Biegeabschnitts 6 bildet einen Teil der Spitze 2. Die zweite Seite 5 endet in einem bogenförmigen Biegeabschnitt 7, der nach innen gebogen ist. Der Scheitel des Bogens des Biegeabschnitts 7 bildet einen Teil der Spitze 2 des Clips.

Die erste Seite 4 geht über eine Kante 8 in den flachen Grundkörper 9 einer ersten Seitenwand 10 über, die sich von der ersten Seite 4 in Richtung auf die zweite Seite 5 erstreckt. Die zweite Seite 5 geht über eine Kante 11 in den flachen Grundkörper 12 einer zweiten Seitenwand 13 über, die sich von der zweiten Seite 5 in Richtung auf die erste Seite 4 erstreckt.

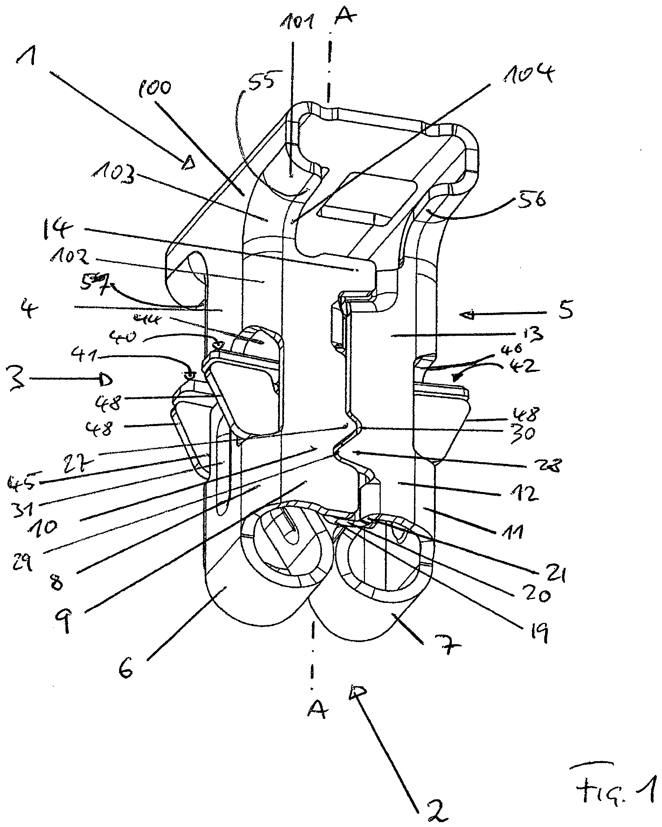

Der in den Fig. dargestellte Clip ist bezüglich einer Ebene, die die Längsachse A enthält und parallel zum Grundkörper 9 und zum Grundkörper 12 verläuft spiegelsymmetrisch aufgebaut. Von der Seite 4 erstreckt sich somit eine (in der Fig. 1 nicht dargestellte) dritte Seitenwand 50 in Richtung auf die zweite Seite 5, wobei die dritte Seitenwand 50 entsprechend der ersten Seitenwand 10 ausgeführt ist. Ferner erstreckt sich von der zweiten Seite 5 eine in der Fig. 1 nicht dargestellte vierte Seitenwand 51 in Richtung auf die erste Seite 4, wobei die vierte Seitenwand 51 entsprechend der zweiten Seitenwand 13 ausgeführt ist. Der erfindungsgemäße Clip in der in den Fig. dargestellten Ausführungsform ist ein einstückiges Element und wurde durch Biegen von Abschnitten eines Metallabschnitts erzeugt.

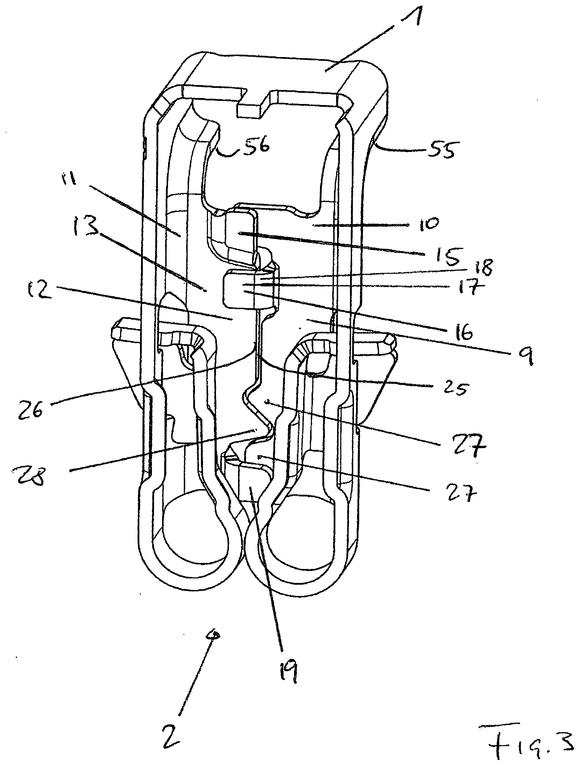

Die erste Seitenwand weist einen ersten vorstehenden Finger 14 auf, der über einen Bereich der zweiten Seitenwand 13 überlappt. Hierzu weist die zweite Seitenwand 13 die in Fig. 3 besser ersichtliche Aufnahme in Form einer Eindellung 15 auf. Ferner weist die erste Seitenwand 10 einen zweiten vorstehenden Finger 16 auf (vgl. Fig. 3). Dieser zweite vorstehende Finger 16 der ersten Seitenwand 10 überlappt einen anderen Bereich der zweiten Seitenwand 13. Dabei ist der erste vorstehende Finger 14 der ersten Seitenwand fluchtend mit dem flachen Grundkörper 9 der ersten Seitenwand ausgeführt, während der zweite vorstehende Finger 16 nach innen gebogen ist und die zweite Seitenwand 13 hintergreift. Dazu weist der zweite Finger 16 einen zwischen dem flachen Grundkörper 9 und dem Endabschnitt 17 des zweiten Fingers 16 vorgesehenen Biegeabschnitt 18 auf, der zunächst nach innen gebogen und dann in die entgegengesetzte Richtung gebogen ist, so dass der Endabschnitt 17 des Fingers 16 parallel zum Grundkörper 12 der zweiten Seitenwand 13 verläuft. Die zweite Seitenwand 13 weist einen vorstehenden Finger 19 auf, der über einen Bereich der ersten Seitenwand 10 überlappt. Der vorspringende Finger 19 der zweiten Seitenwand 13 ist vergleichbar dem zweiten vorstehenden Finger 16 in der ersten Seitenwand ausgebildet und weist einen Endabschnitt 20 auf, der parallel zum Grundkörper 9 der ersten Seitenwand verläuft sowie einen Biegeabschnitt 21, der zwischen dem Grundkörper 12 der zweiten Seitenwand 13 und dem Endabschnitt 20 vorgesehen ist.

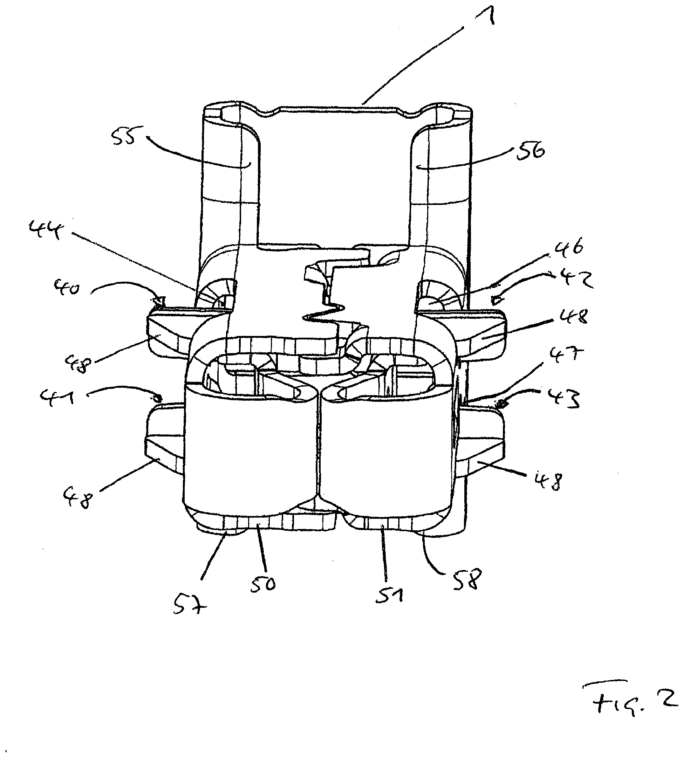

Der Grundkörper 9 der ersten Seitenwand 10 weist eine Schmalseite 25 auf. Der Grundkörper 12 der zweiten Seitenwand 13 weist eine Schmalseite 26 auf. Die Schmalseite 25 und die Schmalseite 26 sind über einen ersten Abschnitt eben ausgeführt und verlaufen in diesem Abschnitt im Wesentlichen parallel zueinander, wobei der ebene Abschnitt der Schmalseite 26 der zweiten Seitenwand 13 länger ist als der ebene Abschnitt der Schmalseite 25 der ersten Seitenwand 10. Der zweite vorstehende Finger 16 überlappt über einen Bereich des Grundkörpers 12 der zweiten Seitenwand 13, der an den ebenen Abschnitt der Schmalseite 26 der zweiten Seitenwand angrenzt. In dem Bereich, in dem der zweite vorstehende Finger 16 den Grundkörper 12 der zweiten Seitenwand 13 hintergreift weist diese einen ebenen Abschnitt der Schmalseite 26 auf. Wie in den Fig. 1 und 2 besonders gut ersichtlich schließt sich an den ebenen Abschnitt der Schmalseite 25 und an den ebenen Abschnitt der Schmalseite 26 ein Profil aus Vorsprüngen 27, 28 und Ausnehmungen 29, 30 an. Hier greift der jeweilige Vorsprung 27, 28 der jeweiligen Seitenwand 10, 13 in einen Rücksprung 30, 29 der gegenüberliegenden Seitenwand 13, 10 ein. Die Vorsprünge 27, 28 sind derart ausgeführt, dass sie nicht mit einem Bereich der gegenüberliegenden Seitenwand überlappen, sondern lediglich in dort vorgesehene Rücksprünge 29, 30 eingreifen.

In dem in den Fig. dargestellten Ausführungsbeispiel weisen die erste Seite 4 und die zweite Seite 5 jeweils einen flachen Grundkörper auf. In der Fig. 1 ist zu erkennen, dass der ansonsten flache Grundkörper 4 eine kleine Erhebung 31 aufweist. Dies verdeutlicht dass im Rahmen dieser Beschreibung verwendete Verständnis des Begriffs "flacher Grundkörper", das nur in einer besonders bevorzugten Ausführungsform einen geometrisch exakt flachen Grundkörper vorsieht, aber in anderen Ausführungsformen - wie hier - auch solche Grundkörper als "flache Grundkörper" bezeichnet, die aufgrund kleiner Vorsprünge von einer geometrisch exakt flachen Form abweichen.

Bei dem in den Fig. gezeichneten Ausführungsbeispiel steht der flache Grundkörper der ersten Seite 4 in einem Winkel von 90 Grad zum flachen Grundkörper 9 der ersten Seitenwand 10. Der flache Grundkörper der zweiten Seite 5 steht in einem Winkel von 90 Grad zum flachen Grundkörper 12 der zweiten Seitenwand 13. Die erste Seitenwand 10 und die zweite Seitenwand 13 sind fluchtend zueinander ausgeführt (ihre nach außen weisenden Oberflächen befinden sich in einer Ebene). Die in den Fig. dargestellte Ausführungsform weist vier Clipsflächen 40, 41, 42, 43 auf. Die jeweilige Clipsfläche ist Teil eines flexiblen Elements das jeweils durch eine Ausnehmung 44, 45, 46, 47, die sich im jeweiligen Übergang zwischen der Seite 4, 5 und der ersten Seitenfläche 10, der zweiten Seitenfläche 13, der dritten Seitenfläche 50 und der vierten Seitenfläche 51 befindet, hindurch tritt. Das jeweilige elastische Element weist eine Abschrägung 48 auf, die bewirkt, dass das fehlende Element, wenn der Clip in ein Loch eines Elements eingeführt wird, mit dem Rand des Lochs in Kontakt kommt und durch das weitere Einschieben des Clips entgegen der Federkraft nach innen gedrückt wird, aber nach Durchschreiten des Lochs in dem Element aufgrund der Federkraft wieder nach außen federt und dadurch das entsprechende Element hintergreift.

Die Clipsflächen 40, 41, 42, 43 sind dem Kopf 1 zugewandt. Der Kopf weist vier Kopfflächen 55, 56, 57, 58 auf, die den Clipsflächen 40, 41, 42, 43 zugewandt sind. Das erste Element und das zweite Element werden zwischen den Clipsflächen 40, 41, 42, 43 und den Kopfflächen 50, 56, 57, 58 gehalten und dadurch das zweite Element an dem ersten Element befestigt.

Der Kopf 1 weist eine Seitenfläche 100 auf und die der Spitze 2 zugewandte Kontaktfläche (Kopffläche) 55, wobei die Seitenfläche 100 des Kopfes über eine erste gerundete Kante 101 in die der Spitze 2 zugewandte Kontaktfläche 55 des Kopfes übergeht und die erste Seite 3 über eine zweite gerundete Kante 102 in die erste Seitenwand 10 übergeht und die erste gerundete Kante 101 über einen Bogenabschnitt 103 in die zweite gerundete Kante 102 übergeht. Die der Spitze 2 zugewandte Kontaktfläche 55 des Kopfes 1 geht über einen Bogenabschnitt 104 in die erste Seitenwand 10 über.

## Patentansprüche

1. Clip zum Befestigen eines ersten Elements an einem zweiten Element, wobei der Clip
• einen Kopf (1) und eine Spitze (2) und
• eine erste Seite (4) und eine zweite Seite (5), wobei sich die erste Seite (4) von dem Kopf (1) in Richtung auf die Spitze (2) erstreckt und die zweite Seite (5) sich von dem Kopf (1) in Richtung auf die Spitze (2) erstreckt,
• wobei sich eine erste Seitenwand (10) von der ersten Seite (4) in Richtung auf die zweite Seite (5) erstreckt und sich eine zweite Seitenwand (13) von der zweiten Seite (5) in Richtung auf die erste Seite (4) erstreckt,
• wobei die erste Seitenwand (10) einen ersten vorstehenden Finger (14) aufweist, der über einen Bereich der zweiten Seitenwand (13) überlappt,
wobei die erste Seitenwand (10) einen zweiten vorstehenden Finger (16) aufweist, der über einen anderen Bereich der zweiten Seitenwand (13) überlappt
**dadurch gekennzeichnet, dass** die erste Seitenwand (10) einen flachen Grundkörper (9) aufweist, wobei der zweite vorstehende Finger (16) einen Endabschnitt (17) aufweist, der parallel zum flachen Grundkörper (9) verläuft, wobei der Endabschnitt (17) des zweiten Fingers (16) eine nach außen weisende Oberfläche aufweist, die in einer Ebene verläuft, die parallel zu einer Ebene verläuft, in der sich die nach außen weisende Oberfläche des Grundkörpers (9) erstreckt, wobei zwischen dem Grundkörper und dem Endabschnitt des zweiten Fingers ein Biegeabschnitt (18) vorgesehen ist und der Biegeabschnitt (18) als Doppelbiegung ausgebildet, der zunächst in eine erste Richtung gebogen ist und dann im weiteren Verlauf in eine andere Richtung gebogen ist.

2. Clip nach Anspruch 1, **dadurch gekennzeichnet, dass** der erste vorstehende Finger (14) fluchtend mit dem Grundkörper (9) ausgeführt ist.

3. Clip nach Anspruch 1 oder 2, **dadurch gekennzeichnet, dass** die zweite Seitenwand (13) eine Aufnahme (15) hat, um den ersten vorstehenden Finger (14) aufzunehmen.

4. Clip nach einem der Ansprüche 1 bis 3, **dadurch gekennzeichnet, dass** die zweite Seitenwand (13) einen vorstehenden Finger (19) aufweist, der über einen Bereich der ersten Seitenwand überlappt.

5. Clip nach einem der Ansprüche 1 bis 4, **dadurch gekennzeichnet, dass** eine Schmalseite (25) des Grundkörpers (9) der ersten Seitenwand (10) der zweiten Seitenwand (13) zugewandt ist, und dass die zweite Seitenwand (13) einen flachen Grundkörper (12) hat, wobei eine Schmalseite (26) des Grundkörpers (12) der zweiten Seitenwand (13) der ersten Seitenwand (10) zugewandt ist, wobei die Schmalseite (25) der ersten Seitenwand (10) und/oder die Schmalseite (26) der zweiten Seitenwand (13) zumindest abschnittweise eben sind.

6. Clip nach Anspruch 5, **dadurch gekennzeichnet, dass** der erste vorstehende Finger (14) über einen Bereich des Grundkörpers (12) der zweiten Seitenwand (13) überlappt, der an den ebenen Abschnitt der Schmalseite (26) der zweiten Seitenwand (13) angrenzt, und/oder der zweite vorstehende Finger (16) über einen Bereich des Grundkörpers (12) der zweiten Seitenwand (13) überlappt, der an den ebenen Abschnitt der Schmalseite (26) der zweiten Seitenwand (13) angrenzt.

7. Clip nach einem der Ansprüche 1 bis 6, **dadurch gekennzeichnet, dass** ein Bogen (6) an einem Ende der ersten Seite (4) vorgesehen ist, wobei der Scheitel des Bogens (6) am Ende der ersten Seite (4) einen Teil der Spitze (2) des Clips ausbildet und/oder dass ein Bogen (7) an einem Ende der zweiten Seite (5) vorgesehen ist, wobei der Scheitel des Bogens (7) am Ende der zweiten Seite (5) einen Teil der Spitze (2) des Clips ausbildet

8. Clip nach einem der Ansprüche 1 bis 7, **dadurch gekennzeichnet, dass** die erste Seite (4) einen flachen Grundkörper hat, der sich von dem Kopf (1) in Richtung auf die Spitze (2) erstreckt, und die erste Seitenwand (10) einen flachen Grundkörper (9) hat, der in einem Winkel zum flachen Grundkörper der ersten Seite (4) steht, und/oder die zweite Seite (5) einen flachen Grundkörper hat, der sich von dem Kopf (1) in Richtung auf die Spitze (2) erstreckt, und die zweite Seitenwand (13) einen flachen Grundkörper (12) hat, der in einem Winkel zum flachen Grundkörper der zweiten Seite (5) steht.

9. Clip nach Anspruch 8, **dadurch gekennzeichnet, dass** der flache Grundkörper der ersten Seite (4) parallel zum flachen Grundkörper der zweiten Seite (5) ausgerichtet ist.

10. Clip nach einem der Ansprüche 1 bis 9, **gekennzeichnet durch** eine Clipsfläche (40, 41), die von der ersten Seite (4) vorsteht und die von dem Kopf (1) beabstandet ist und die dem Kopf (1) zugewandt ist.

11. Clip nach Anspruch 10, **gekennzeichnet durch** eine Kopffläche (55, 57), die der Clipsfläche (40, 41) zugewandt ist.

12. Clip nach einem der Ansprüche 1 bis 11, **dadurch gekennzeichnet, dass** der Kopf (1) und die erste Seite (4) und die erste Seitenwand (10) und die zweite Seite (5) und die zweite Seitenwand (13) alle Teil eines einstückigen Elements sind, die durch das Biegen von Abschnitten eines Metallabschnitts erzeugt wurden.

13. Clip nach einem der Ansprüche 1 bis 12, **dadurch gekennzeichnet, dass** der Kopf (1) eine Seitenfläche (100) aufweist und eine der Spitze (2) zugewandte Kontaktfläche (55, 56, 57,58) und
die Seitenfläche (100) des Kopfes über eine erste gerundete Kante (101) in die der Spitze (2) zugewandte Kontaktfläche (55, 56, 57, 58) des Kopfes übergeht und die erste Seite (3) über eine zweite gerundete Kante (102) in die erste Seitenwand (10) übergeht und die erste gerundete Kante (101) über einen Bogenabschnitt (103) in die zweite gerundete Kante (102) übergeht.

14. Vorrichtung mit einem ersten Element und einem an dem ersten Element befestigten zweiten Element, wobei das erste Element ein Loch aufweist und das zweite Element mittels eines Clips nach einem der Ansprüche 1 bis 13 an dem ersten Element befestigt ist, wobei der Clips das Loch derart durchgreift, dass der Kopf (1) des Clips auf einer Seite des ersten Elements und die Spitze (2) des Clips auf der gegenüberliegenden Seite des Elements angeordnet ist.

## Claims

1. Clip for fastening a first element to a second element, wherein the clip comprises
• a head (1) and a tip (2) and
• a first side (4) and a second side (5), wherein the first side (4) extends from the head (1) in the direction of the tip (2) and the second side (5) extends from the head (1) in the direction of the tip (2),
• wherein a first side wall (10) extends from the first side (4) in the direction of the second side (5) and a second side wall (13) extends from the second side (5) in the direction of the first side (4),
• wherein the first side wall (10) comprises a first projecting finger (14) which overlaps a region of the second side wall (13),
wherein the first side wall (10) comprises a second projecting finger (16) which overlaps another region of the second side wall (13),
**characterized in that** the first side wall (10) has a flat base body (9), wherein the second projecting finger (16) has an end section (17) which runs parallel to the flat base body (9), wherein the end section (17) of the second finger (16) has an outwardly facing surface which runs in a plane running parallel to a plane in which the outwardly facing surface of the base body (9) extends, wherein a bent section (18) is provided between the base body and the end section of the second finger, and the bent section (18) is configured as a double bend, which is initially bent in a first direction and is then bent in the further course in another direction.

2. Clip according to Claim 1, **characterized in that** the first projecting finger (14) is aligned with the base body (9).

3. Clip according to Claim 1 or 2, **characterized in that** the second side wall (13) has a receiving means (15) for receiving the first projecting finger (14).

4. Clip according to one of Claims 1 to 3, **characterized in that** the second side wall (13) has a projecting finger (19) which overlaps a region of the first side wall.

5. Clip according to one of Claims 1 to 4, **characterized in that** a narrow side (25) of the base body (9) of the first side wall (10) faces the second side wall (13), and that the second side wall (13) has a flat base body (12), wherein a narrow side (26) of the base body (12) of the second side wall (13) faces the first side wall (10), wherein the narrow side (25) of the first side wall (10) and/or the narrow side (26) of the second side wall (13) are level, at least in sections.

6. Clip according to Claim 5, **characterized in that** the first projecting finger (14) overlaps a region of the base body (12) of the second side wall (13) which is adjacent to the level section of the narrow side (26) of the second side wall (13), and/or the second projecting finger (16) overlaps a region of the base body (12) of the second side wall (13) which is adjacent to the level section of the narrow side (26) of the second side wall (13).

7. Clip according to one of Claims 1 to 6, **characterized in that** an arc (6) is provided on one end of the first side (4), wherein the vertex of the arc (6) on the end of the first side (4) forms a part of the tip (2) of the clip and/or that an arc (7) is provided on one end of the second side (5), wherein the vertex of the arc (7) on the end of the second side (5) forms a part of the tip (2) of the clip.

8. Clip according to one of Claims 1 to 7, **characterized in that** the first side (4) has a flat base body which extends from the head (1) in the direction of the tip (2), and the first side wall (10) has a flat base body (9) standing at an angle to the flat base body of the first side (4), and/or the second side (5) has a flat base body which extends from the head (1) in the direction of the tip (2), and the second side wall (13) has a flat base body (12) which is at an angle to the flat base body of the second side (5).

9. Clip according to Claim 8, **characterized in that** the flat base body of the first side (4) is oriented parallel to the flat base body of the second side (5).

10. Clip according to one of Claims 1 to 9, **characterized by** a clip surface (40, 41) which projects from the first side (4) and is spaced apart from the head (1) and which faces the head (1).

11. Clip according to Claim 10, **characterized by** a head surface (55, 57) which faces the clip surface (40, 41).

12. Clip according to one of Claims 1 to 11, **characterized in that** the head (1) and the first side (4) and the first side wall (10) and the second side (5) and the second side wall (13) are all part of a one-piece element produced by bending sections of a metal section.

13. Clip according to one of claims 1 to 12, **characterized in that** the head (1) comprises a side surface (100) and a contact surface (55, 56, 57, 58) facing the tip (2) and
the side surface (100) of the head merges via a first rounded edge (101) with the contact surface (55, 56, 57, 58) of the head facing the tip (2), and the first side (3) merges via a second rounded edge (102) with the first side wall (10) and the first rounded edge (101) merges with the second rounded edge (102) via a bent section (103).

14. Device comprising a first element and a second element fastened to the first element, wherein the first element has a hole and the second element is fastened to the first element by means of a clip according to one of Claims 1 to 13, wherein the clip extends through the hole in such a manner that the head (1) of the clip is arranged on one side of the first element and the tip (2) of the clip is arranged on the opposite side of the element.

## Revendications

1. Attache pour fixer un premier élément à un deuxième élément, dans laquelle l'attache présente
• une tête (1) et une pointe (2) et
• un premier côté (4) et un deuxième côté (5), dans laquelle le premier côté (4) s'étend de la tête (1) en direction de la pointe (2) et le deuxième côté (5) s'étend de la tête (1) en direction de la pointe (2),
• dans laquelle une première paroi latérale (10) s'étend du premier côté (4) en direction du deuxième côté (5) et une deuxième paroi latérale (13) s'étend du deuxième côté (5) en direction du premier côté (4),
• dans laquelle la première paroi latérale (10) présente un premier doigt en saillie (14) qui se superpose à une région de la deuxième paroi latérale (13),
dans laquelle la première paroi latérale (10) présente un deuxième doigt en saillie (16) qui se superpose à une autre zone de la deuxième paroi latérale (13) **caractérisé en ce que** la première paroi latérale (10) présente un corps de base plat (9), dans laquelle le deuxième doigt en saillie (16) présente une section d'extrémité (17) qui s'étend parallèlement au corps de base plat (9), dans laquelle la section d'extrémité (17) du deuxième doigt (16) présente une surface tournée vers l'extérieur qui s'étend dans un plan parallèle à un plan dans lequel s'étend la surface tournée vers l'extérieur du corps de base (9), dans laquelle entre le corps de base et la section d'extrémité du deuxième doigt, une section de pliage (18) est prévue et la section de pliage (18) est conçue comme un double pli, qui est d'abord plié dans une première direction et est ensuite plié dans une autre direction.

2. Attache selon la revendication 1, **caractérisée en ce que** le premier doigt en saillie (14) est conçu pour affleurer le corps de base (9).

3. Attache selon la revendication 1 ou 2, **caractérisée en ce que** la deuxième paroi latérale (13) présente un logement (15) pour recevoir le premier doigt en saillie (14).

4. Attache selon une des revendications 1 à 3, **caractérisée en ce que** la deuxième paroi latérale (13) présente un doigt en saillie (19) qui se superpose à une zone de la première paroi latérale.

5. Attache selon une des revendications 1 à 4, **caractérisée en ce qu'**un côté étroit (25) du corps de base (9) fait face à la première paroi latérale (10) de la deuxième paroi latérale (13), et que la deuxième paroi latérale (13) possède un corps de base plat (12), dans lequel un côté étroit (26) du corps de base (12) est tourné vers la deuxième paroi latérale (13) de la première paroi latérale (10), dans lequel le côté étroit (25) de la première paroi latérale (10) et/ou le côté étroit (26) de la deuxième paroi latérale (13) sont au moins plats par sections.

6. Attache selon la revendication 5, **caractérisée en ce que** le premier doigt en saillie (14) se superpose à une zone du corps de base (12) de la deuxième paroi latérale (13) qui jouxte la section plate du côté étroit (26) de la deuxième paroi latérale (13), et/ou le deuxième doigt en saillie (16) se superpose à une région du corps de base (12) de la deuxième paroi latérale (13) qui jouxte la section plate du côté étroit (26) de la deuxième paroi latérale (13).

7. Attache selon une des revendications 1 à 6, **caractérisée en ce qu'**un arceau (6) est prévu à une extrémité du premier côté (4), dans lequel le sommet de l'arceau (6) forme à l'extrémité du premier côté (4) une partie de la pointe (2) de l'attache et/ou qu'un arceau (7) est prévu à une extrémité du deuxième côté (5), dans lequel le sommet de l'arceau (7) à l'extrémité du deuxième côté (5) forme une pointe (2) de l'attache.

8. Attache selon une des revendications 1 à 7, **caractérisée en ce que** le premier côté (4) possède un corps de base plat qui s'étend depuis la tête (1) en direction de la pointe (2) et la première paroi latérale (10) possède un corps de base plat (9), qui forme un angle par rapport au corps de base plat du premier côté (4), et/ou le deuxième côté (5) possède un corps de base plat qui s'étend depuis la tête (1) en direction de la pointe (2), et la deuxième paroi latérale (13) possède un corps de base plat (12), qui forme un angle par rapport au corps de base plat du deuxième côté (5).

9. Attache selon la revendication 8, **caractérisée en ce que** le corps de base plat du premier côté (4) est aligné parallèlement au corps de base plat du deuxième côté (5).

10. Attache selon une des revendications 1 à 9, **caractérisée par** une surface d'attache (40, 41) qui dépasse en saillie du premier côté (4) et qui est espacée de la tête (1) et est tournée vers la tête (1).

11. Attache selon la revendication 10, **caractérisée par** une surface de tête (55, 57) qui est tournée vers la surface d'attache (40, 41).

12. Attache selon une des revendications 1 à 11, **caractérisée en ce que** la tête (1) et le premier côté (4) et la première paroi latérale (10) et le deuxième côté (5) et la deuxième paroi latérale (13) sont tous des parties d'un élément monobloc, qui sont créées en pliant des sections d'une section métallique.

13. Attache selon une des revendications 1 à 12, **caractérisée en ce que** la tête (1) présente une surface latérale (100) et une surface de contact (55, 56, 57, 58) tournée vers la pointe (2) et la surface latérale (100) de la tête aboutit par un premier bord arrondi (101) à la surface de contact (55, 56, 57, 58) de la tête tournée vers la pointe (2) et le premier côté (3) aboutit par un deuxième bord arrondi (102) à la première paroi latérale (10) et le premier bord arrondi (101) aboutit par une section incurvée (103) au deuxième bord arrondi (102).

14. Dispositif comportant un premier élément et un deuxième élément fixés sur le premier élément, dans lequel le premier élément présente un trou et le deuxième élément est fixé sur le premier élément au moyen d'une attache selon une des revendications 1 à 13, dans lequel l'attache traverse le trou de telle sorte que la tête (1) de l'attache soit disposée d'un côté du premier élément et la pointe (2) de l'attache soit disposée du côté opposé de l'élément.
